# NEUE EUROPÄISCHE PATENTSCHRIFT

(11) **EP 1 544 452 B2**
(45) Veröffentlichungstag und Bekanntmachung des Hinweises auf die Entscheidung über den Einspruch: **21.02.2018**
(45) Hinweis auf die Patenterteilung: 17.08.2011
(21) Anmeldenummer: 04105333.1
(22) Anmeldetag: 27.10.2004
(51) Int. Cl.: F02M 37/22

(54) **Zweistufiger Kraftstofffilter**
Two-stage fuel filter
Filtre à carburant à deux étages

(30) Priorität: 20.12.2003 DE 10360208
(43) Veröffentlichungstag der Anmeldung: 22.06.2005
(73) Patentinhaber: ROBERT BOSCH GMBH, 70442 Stuttgart (DE)
(72) Erfinder: Baz, Alfonso, 28290 Las Matas (ES); Garcia Benitez, Cesar, 28028 Madrid (ES)

(56) Entgegenhaltungen:
- EP-A2- 1 256 707
- EP-B1- 1 606 037
- WO-A1-2004/082804
- US-A- 3 187 895
- US-A- 3 465 883
- US-A- 4 253 954
- US-A- 4 372 847
- US-A- 5 993 675
- Priodoc. DE 10313867
- WENTE V.A. ET AL: 'Manufacture of Superfine Organic Fibers', 10 April 1994, NAVAL RESEARCH LABORATORY, WASHINGTON D.C.

## Beschreibung

Die Erfindung betrifft einen zweistufigen Filter, insbesondere einen Kraftstofffilter, mit mindestens einer ersten Filterstufe, die wenigstens teilweise aus einem hydrophilen Material besteht, und mindestens einer stromabwärts angeordneten zweiten Filterstufe, die wenigstens teilweise aus einem hydrophoben Material besteht.

Kraftstofffilter werden unter anderem in Dieselmotoren zum Herausfiltern von in Dieselkraftstoff enthaltenen Verunreinigungen und zum Abscheiden von Wasser aus dem Dieselkraftstoff eingesetzt, um hierdurch verursachte Störungen und Schäden wie beispielsweise Verunreinigungen oder Korrosion im Kraftstoffsystem oder eine schlechtere Verbrennung im Motor zu vermeiden.

Aus der DE 101 23 190 A1 ist ein Kraftstofffilter der eingangs genannten Art bekannt. Der Kraftstofffilter weist ein Gehäuse mit einem einen zylindrischen Filtereinsatz aufnehmenden becherförmigen Unterteil auf. Der Filtereinsatz wird durch einen zweistufigen Filter gebildet, wobei einer ersten Filterstufe mit einem hydrophilen Filtermaterial eine zweite Filterstufe aus einem hydrophobem Filtermaterial in geringem Abstand nachgeordnet ist. Beide Filterstufen sind konzentrisch zueinander und direkt aneinander oder in geringem Abstand zueinander angeordnet und werden radial von außen nach innen durchströmt. Die erste Filterstufe lässt durch die hydrophilen Eigenschaften im Kraftstoff enthaltenes, fein verteiltes Wasser zu Tröpfchen oder Tropfen koaleszieren, welche dann an der hydrophoben zweiten Filterstufe gesammelt und über die Schwerkraft abgeschieden werden.

Des weiteren ist aus der EP 1 267 068 A2 ein Filter für Dieselkraftstoffe mit einer ersten und einer zweiten Filterstufe bekannt, die innerhalb eines Filtergehäuses zueinander konzentrisch angeordnet sind. Während die erste Filterstufe als Wickeleinsatz ausgebildet ist, ist die zweite Filterstufe in der Art eines umgedrehten Korbes innerhalb des Wickeleinsatzes angeordnet. Der zu filternde Kraftstoff tritt axial von oben nach unten durch die erste Filterstufe hindurch und gelangt über einen Raum unterhalb der Filterstufen von unten in die zweite Filterstufe ein. Während in der ersten Filterstufe Partikel aus dem Kraftstoff herausgefiltert werden, wird an der zweiten, als Gewebe ausgebildeten Filterstufe Wasser abgeschieden.

Es ist die Aufgabe der vorliegenden Erfindung, einen Filter zur Verfügung zu stellen, der eine verbesserte Abscheidung von Wasser ermöglicht.

Diese Aufgabe wird bei einem Filter der eingangs genannten Art dadurch gelöst, dass der Strömungsquerschnitt der zweiten Filterstufe größer als der Strömungsquerschnitt der ersten Filterstufe ist.

Wie bei dem aus der DE 101 23 190 A1 bekannten Kraftstofffilter besteht auch beim erfindungsgemäßen Kraftstofffilter das Prinzip des Wasserabscheidens darin, dass das im Kraftstoff enthaltene Wasser in der ersten Filterstufe aufgrund ihrer hydrophilen Eigenschaften koalesziert, so dass sich kleine Tröpfchen oder Tropfen bilden, die in der zweiten Filterstufe gesammelt und abgeschieden werden.

Aus der nachveröffentlichten EP 1 606 037 B1 ist ein zweistufiges Filtersystem für Kraftstoffe bekannt, bei dem die erste Filterstufe einen Coalescer darstellt und die zweite Filterstufe einen Partikelfilter.

Ein wesentlicher Kerngedanke der Erfindung besteht darin, dass - anders als bei dem aus der DE 101 23 190 A1 bekannten Kraftstofffilter - aufgrund einem gegenüber der ersten Filterstufe größeren Strömungsquerschnitt der zweiten Filterstufe die Strömungsgeschwindigkeit in der zweiten Filterstufe gegenüber der Strömungsgeschwindigkeit in der ersten Filterstufe herabgesetzt ist. Dadurch wird das Sammeln von Tröpfchen und Tropfen, die sich in der hydrophilen ersten Filterstufe gebildet haben, sowie deren Verbinden zu größeren Tropfen unterstützt, so dass der Wasserabscheidegrad wesentlich erhöht wird.

Im Ergebnis bietet der erfindungsgemäße Filter den wesentlichen Vorteil, dass gegenüber herkömmlichen Filtern der Abscheidegrad für im Kraftstoff enthaltenes Wasser verbessert oder bei gegenüber herkömmlichen Filtern gleichem Abscheidegrad die Fläche des Filtermaterials insgesamt verringert werden kann.

In einer einfachen Ausgestaltung der Erfindung ist es beispielsweise möglich, die Filterstufen konzentrisch zueinander anzuordnen, wobei die erste Filterstufe bei gleicher Höhe der Filterstufen die innere der beiden Filterstufen ist, und wobei die Filterstufen radial von innen nach außen durchflossen werden. Bevorzugt wird die zweite Filterstufe jedoch in axialer Richtung bzw. in Richtung einer Symmetrieachse des Filters im Wesentlichen hinter der ersten Filterstufe angeordnet. Das ist insofern vorteilhaft, als die Strömungsquerschnitte der Filterstufen freier wählbar sind als bei radial zueinander angeordneten Filterstufen.

In einer darüber hinaus bevorzugten Weiterbildung wird die erste Filterstufe im Wesentlichen axial durchströmt. Bevorzugt ist weiterhin, dass die zweite Filterstufe radial und besonders bevorzugt von außen nach innen durchströmt wird. Der Einbau des Filters erfolgt dann bevorzugt derart, dass die axiale Richtung im Wesentlichen der vertikalen Richtung und die radiale Richtung der horizontalen Richtung entspricht, so dass abgeschiedenes Wasser in der zweiten Filterstufe quer zur Strömungsrichtung zum Boden des Filtergehäuses absinken kann.

In einer bevorzugten Weiterbildung weist die zweite Filterstufe wenigstens ein dickes Filtermedium auf. Der Vorteil eines vergleichsweise dicken Filtermediums besteht darin, dass damit in der zweiten Filterstufe nicht nur Wasser abgeschieden, sondern auch Partikel aus dem Kraftstoff herausgefiltert werden können. Da der Kraftstoff dann sowohl durch die erste Filterstufe, als auch durch die zweite Filterstufe gefiltert wird, kann die Standzeit des Filters erheblich erhöht werden. Vorzugsweise wird ein filtermaterial in der Dicke von wenigstens 0,5 mm verwendet. Möglich sind aber auch dünnere Schichten, wie z.B. 0,4 mm.

Aus der nachveröffentlichten EP 1 606 037 B1 ist ein zweistufiges Filtersystem für Kraftstoffe bekannt, bei dem die erste Filterstufe einen Coalescer darstellt und die zweite Filterstufe einen Partikelfilter.

Vorzugsweise ist die zweite Filterstufe derart beschaffen, dass das Hindurchtreten von Wassertropfen oder Wassertröpfchen vollständig unterbunden wird. In einer bevorzugten Ausgestaltung ist der Aufbau des Filters daher derart, dass der Abscheidegrad von Wasser der zweiten Filterstufe im Wesentlichen unabhängig von einer Maschenweite eines Gewebes ist.

Das Filtermaterial der zweiten Filterstufe besteht vorzugsweise aus Zellulose, synthetischen Fasern, Glasfasern oder dergleichen oder aus einer Kombination dieser Materialien. Bevorzugt wird für die zweite Filterstufe ein Filtermaterial mit äußerst feinen Poren eingesetzt, um einen hohen Abscheidegrad zu erzielen. Der Abscheidegrad hängt dann von der Porengröße des Filtermaterials und nicht von der Maschenweite eines Gewebes ab, und es können auch sehr kleine Wassertröpfchen abgeschieden werden, so dass der Abscheidegrad sehr hoch ist. Dabei ist die zweite Filterstufe vorzugsweise keine dünne, membranartige, sondern eine dicke Filterschicht, mit der auch Schmutz- oder sonstige Partikel aus dem Kraftstoff herausgefiltert werden können. Dabei kann die Dicke der Schicht die Standzeit und auch den Abscheidegrad beeinflussen. Bevorzugt ist eine Filterdicke von ca. 0,5 mm oder mehr, es sind aber auch kleinere Dicken möglich.

Die hydrophobe Wirkung der zweiten Filterstufe kann beispielsweise dadurch erzielt werden, dass in der Filterstufe Materialien wie z.B. Polyester, Silikon, PTFE (Teflon), Wachs, Polypropylen oder fluorisierte Acrylate, fluorisierte Resole oder vergleichbare im Stand der Technik bekannte Materialien enthalten sind. Auch der Einsatz von einem beispielsweise aus Polyester bestehenden Mikrofaser-Material, insbesondere einem Mikrofaservlies (Melt-Blown), oder die Verwendung einer mikroporösen Sperrschicht ist möglich.

Vorzugsweise ist die zweite Filterstufe als Sternfiltereinsatz ausgebildet. Als Strömungsquerschnitt eines Sternfiltereinsatzes wird hier der mittlere Strömungsquerschnitt verstanden, der sich aus dem mittleren Radius des als Sternfilter gefalteten Filtermaterials ergibt.

Die erste Filterstufe kann wenigstens teilweise aus einem Material wie z.B. Zellulose oder Glasfasern bestehen.

Vorzugsweise umfasst die erste Filterstufe einen Wickeleinsatz.

Weitere Vorteile und Anwendungsmöglichkeiten der vorliegenden Erfindung ergeben sich aus dem Ausführungsbeispiel, das im folgenden mit Bezug auf die Figur beschrieben wird.

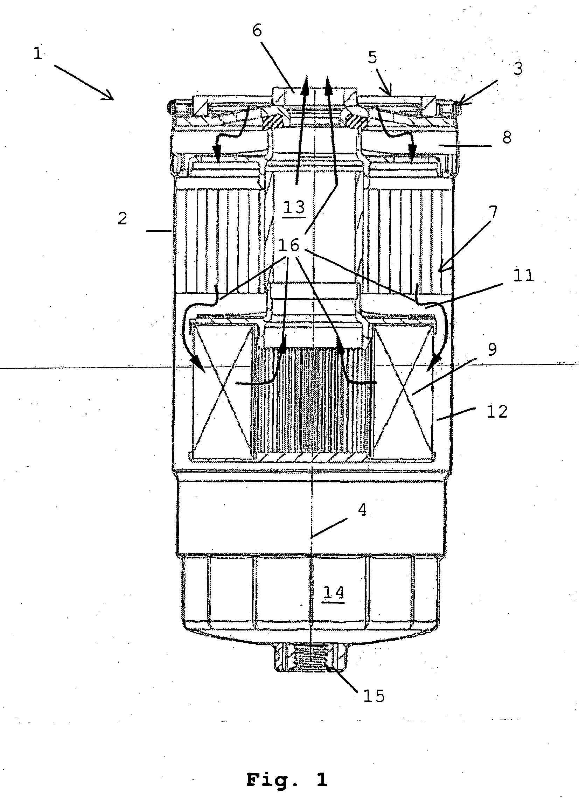

Figur 1 zeigt das Prinzip eines bevorzugten Ausführungsbeispiels in vereinfachter Darstellung im Querschnitt.

In Figur 1 ist schematisch ein Kraftstofffilter **1** mit einem Gehäuse **2** dargestellt, das an seinem oberen Ende mit einem Deckel **3** verschlossen ist. Insgesamt ist der Kraftstofffilter **1** im Wesentlichen rotationssymmetrisch um eine Mittelachse **4** aufgebaut und im Wesentlichen topfförmig gestaltet.

In einem radial äußeren Bereich ist im Deckel **3** ein Kraftstoffeinlass **5** und in dessen Mitte ein Kraftstoffauslass **6** vorgesehen. Unterhalb des Deckels **3** ist eine erste Filterstufe **7** angeordnet, wobei sich zwischen Deckel **3** und erster Filterstufe **7** ein radialer Verteilungsbereich **8** erstreckt.

Die erste Filterstufe **7** ist als gewickelter Einsatz (Wickelfilter) konzentrisch zur Mittelachse **4** angeordnet. Als Filtermaterial für den Wickelfilter werden bevorzugt Zellulose- und/oder Glasfasern verwendet, welche teilweise oder ganz so imprägniert sind, dass das Filtermaterial Koaleszenzeigenschaften hat und hydrophil wirkt. Vorzugsweise beträgt der imprägnierte Anteil der Fasern zwischen etwa 60% und 90%.

Unterhalb der ersten Filterstufe **7** ist eine zweite Filterstufe **9** angeordnet, wobei sich zwischen der ersten Filterstufe **7** und der zweiten Filterstufe ein sich in der Art einer Ringscheibe erstreckender, radialer Sammelbereich **11** befindet. Zwischen der durch einen Sternfiltereinsatz gebildeten zweiten Filterstufe **9** und der Gehäusewand verbleibt ein sich an den radialen Sammelbereich **11** anschließender, axialer Verteilungsbereich **12** wirkender Ringspalt, der die zweite Filterstufe **9** radial von außen umschließt. Der Außenbereich des Sternfiltereinsatzes ist seine Schmutzseite, die Innenseite die Reinseite, wobei die Ober- und Unterseite des Sternfiltereinsatzes gegenüber der Schmutzseite abgedichtet sind. Als Filtermaterial für die zweite Filterstufe **9** können verschiedene Materialien verwendet werden. Vorzugsweise wird wenigstens zum Teil ein Material wie Zellulose oder es werden synthetische Fasern oder Glasfasern oder dergleichen mehr eingesetzt.

Die Reinseite der zweiten Filterstufe **9** ist über ein sich entlang der Mittelachse **4** erstreckendes Auslassrohr **13** mit dem Kraftstoffauslass **6** im Deckel **3** verbunden.

Unterhalb der zweiten Filterstufe **9** erstreckt sich der Bodenbereich des Gehäuses **2,** der als Sumpf **14** für abgeschiedenes Wasser dient. Am Boden des Sumpfs **14** ist ein Wasserablass **15** vorgesehen, der über eine hier nicht dargestellte Ablassschraube oder ein steuerbares Ablassventil verschließbar ist.

Der Vorteil der Anordnung eines radial durchflossenen Sternfiltereinsatzes hinter einem axial durchflossenen Wickeleinsatz besteht darin, dass der Strömungsquerschnitt des Wickeleinsatzes durch den Gehäusedurchmesser und den Außendurchmesser des Auslassrohres **13** beschränkt ist, die axiale Ausdehnung des Sternfiltereinsatzes aber in bestimmten Grenzen in Abhängigkeit von der Höhe des Gehäuses variiert werden kann. Somit kann über die Wahl einer geeigneten Höhe des Sternfiltereinsatzes dafür Sorge getragen werden, dass sein mittlerer Strömungsquerschnitt größer als der Strömungsquerschnitt des Wickeleinsatzes und die mittlere Strömungsgeschwindigkeit innerhalb des Sternfiltereinsatzes dementsprechend geringer als die Strömungsgeschwindigkeit im Wickeleinsatz ist.

Der zu filternde Kraftstoff gelangt durch den Kraftstoffeinlass **5** über den radialen Verteilungsbereich **8** in den Wickeleinsatz der ersten Filterstufe **7.** Die erste Filterstufe **7** wird im Wesentlichen axial, also parallel zu seiner Längsachse und zur Mittelachse **4** durchströmt. Dabei werden bedingt durch die hydrophilen Eigenschaften der ersten Filterstufe die in der Emulsion extrem fein verteilten Wassertröpfchen wenigstens teilweise gesammelt und zu größeren Wassertröpfchen und -tropfen vereinigt. Der Kraftstoff tritt aus der ersten Filterstufe **7** in den radialen Sammelbereich **11** aus, von dem aus er in den axialen Verteilungsbereich **12** gelangt.

Im axialen Verteilungsbereich **12** wird der zu filternde Kraftstoff auf die Filterfläche der zweiten Filterstufe **9** verteilt und tritt radial von außen nach innen durch die zweite Filterstufe **9** hindurch, in das Auslassrohr **17** ein und über den Kraftstoffauslass **6** aus dem Gehäuse **2** aus. Abgeschiedenes Wasser läuft schwerkraftbedingt an der Schmutzseite der zweiten Filterstufe **9** in den Sumpf **14** ab.

Die Pfeile **16** zeigen die jeweilige Strömungsrichtung des Kraftstoffs im Gehäuse an.

Neben der konkret beschriebenen Ausführungsform kann die Erfindung auch in anderen Ausgestaltungen realisiert werden. Beispielsweise kann eine Vielzahl von 3, 4, 5 oder mehr Filterstufen vorgesehen sein. Dann ist eine hydrophile Filterstufen als erste Filterstufe anzusehen und eine weitere, stromabwärts gelegene hydrophobe Filterstufe als zweite. Die "erste" und die "zweite" Filterstufe können durch eine oder auch mehrere weitere Filterstufen getrennt sein. Auch können mehrere Filtereinsätze zu einer Filterstufe zusammengefasst sein. Auch ist die Erfindung nicht auf die Anordnung eines Sternfiltereinsatzes als zweite Filterstufe stromabwärts hinter einem axial durchflossenen Wickelfilter als erster Filterstufe beschränkt. Vielmehr können geeignete Filtereinsätze aus einer Vielzahl dem Fachmann bekannten Form von Filtereinsätzen gewählt werden. Entsprechendes gilt für die Auswahl der Filtermaterialien.

## Patentansprüche

1. Filter, insbesondere Kraftstofffilter, der im Wesentlichen rotationssymmetrisch um eine Mittelachse (4) aufgebaut ist,
mit mindestens einer ersten Filterstufe (7), die wenigstens teilweise aus einem hydrophilem Material besteht, und mindestens einer stromabwärts angeordneten zweiten Filterstufe (9), die wenigstens teilweise aus einem hydrophobem Material besteht, **dadurch gekennzeichnet, dass** der Strömungsquerschnitt der zweiten Filterstufe (9) größer als der Strömungsquerschnitt der ersten Filterstufe (7) ist,
wobei die erste Filterstufe (7) im Wesentlichen axial durchströmt wird,
wobei die erste Filterstufe (7) einen Wickeleinsatz umfasst,
wobei insbesondere die erste Filterstufe (7) wenigstens teilweise aus einer Kombination der Materialien Zellulose und Glasfasern besteht,
wobei die axiale Richtung parallel zur Mittelachse (4) verläuft.

2. Filter nach Anspruch 1, **dadurch gekennzeichnet, dass** die zweite Filterstufe (9) in axialer Richtung hinter der ersten Filterstufe (7) angeordnet ist.

3. Filter nach einem der Ansprüche 1 oder 2, **dadurch gekennzeichnet, dass** die zweite Filterstufe (9) radial und vorzugsweise von außen nach innen durchströmt wird.

4. Filter nach einem der Ansprüche 1 bis 3, **dadurch gekennzeichnet, dass** die zweite Filterstufe (9) mit einem dicken Filtermedium ausgebildet ist.

5. Filter nach einem der Ansprüche 1 oder 4, **dadurch gekennzeichnet, dass** der Abscheidegrad von Wasser der zweiten Filterstufe (9) im Wesentlichen unabhängig von einer Maschenweite ihres Gewebes ist.

6. Filter nach einem der Ansprüche 1 bis 5, **dadurch gekennzeichnet, dass** das Material der zweiten Filterstufe (9) wenigstens teilweise aus Zellulose, synthetischen Fasern , Glasfasern oder dergleichen oder einer Kombination dieser Materialien besteht.

7. Filter nach einem der Ansprüche 1 bis 6, **dadurch gekennzeichnet, dass** die zweite Filterstufe (9) wenigstens eine Schicht aus einem Mikrofasermaterial aufweist, das vorzugsweise wenigstens teilweise aus Polyester besteht.

8. Filter nach einem der Ansprüche 1 bis 7, **dadurch gekennzeichnet, dass** die erste Filterstufe (7) wenigstens teilweise aus Zellulose oder Glasfasern oder einer Kombination dieser Materialien besteht.

9. Filter (1) nach einem der Ansprüche 1 bis 8, **dadurch gekennzeichnet, dass** die zweite Filterstufe (9) einen Sternfiltereinsatz umfasst.

## Claims

1. Filter, in particular fuel filter which is assembled essentially rotationally symmetrically about a centre axis (4),
having at least one first filter stage (7) which is composed at least partially of a hydrophilic material, and having at least one second filter stage (9) which is arranged downstream and which is composed at least partially of a hydrophobic material, **characterized in that** the flow cross section of the second filter stage (9) is larger than the flow cross section of the first filter stage (7),
wherein flow passes through the first filter stage (7) substantially axially,
wherein the first filter stage (7) comprises a wound insert,
wherein in particular the first filter stage (7) is composed at least partially of a combination of the materials cellulose and glass fibres,
wherein the axial direction runs parallel to the centre axis (4).

2. Filter according to Claim 1, **characterized in that** the second filter stage (9) is arranged behind the first filter stage (7) in the axial direction.

3. Filter according to either of Claim 1 and 2, **characterized in that** flow passes through the second filter stage (9) radially and preferably from the outside to the inside.

4. Filter according to one of Claims 1 to 3, **characterized in that** the second filter stage (9) is formed with a thick filter medium.

5. Filter according to either of Claims 1 and 4, **characterized in that** the water filtration efficiency of the second filter stage (9) is substantially independent of a mesh size of its fabric.

6. Filter according to one of Claims 1 to 5, **characterized in that** the material of the second filter stage (9) is composed at least partially of cellulose, synthetic fibres, glass fibres or the like or a combination of said materials.

7. Filter according to one of Claims 1 to 6, **characterized in that** the second filter stage (9) has at least one layer composed of a microfibre material which is preferably composed at least partially of polyester.

8. Filter according to one of Claims 1 to 7, **characterized in that** the first filter stage (7) is composed at least partially of cellulose or glass fibres or a combination of said materials.

9. Filter (1) according to one of Claims 1 to 8, **characterized in that** the second filter stage (9) comprises a star-shaped filter insert.

## Revendications

1. Filtre, en particulier filtre à carburant qui est construit essentiellement avec une symétrie de révolution autour d'un axe médian (4),
comprenant au moins un premier étage de filtre (7), qui se compose au moins en partie d'un matériau hydrophile, et au moins un deuxième étage de filtre (9) disposé en aval, qui se compose au moins en partie d'un matériau hydrophobe, **caractérisé en ce que** la section transversale d'écoulement du deuxième étage de filtre (9) est supérieure à la section transversale d'écoulement du premier étage de filtre (7),
le premier étage de filtre (7) étant traversé par l'écoulement essentiellement axialement,
le premier étage de filtre (7) comprenant un insert enroulé, en particulier le premier étage de filtre (7) se composant au moins en partie d'une combinaison des matériaux cellulose et fibres de verre,
la direction axiale s'étendant parallèlement à l'axe médian (4).

2. Filtre selon la revendication 1, **caractérisé en ce que** le deuxième étage de filtre (9) est disposé dans la direction axiale derrière le premier étage de filtre (7).

3. Filtre selon l'une quelconque des revendications 1 ou 2, **caractérisé en ce que** le deuxième étage de filtre (9) est traversé par l'écoulement radialement et de préférence de l'extérieur vers l'intérieur.

4. Filtre selon l'une quelconque des revendications 1 à 3, **caractérisé en ce que** le deuxième étage de filtre (9) est réalisé avec un milieu filtrant épais.

5. Filtre selon l'une quelconque des revendications 1 à 4, **caractérisé en ce que** le degré de séparation d'eau du deuxième étage de filtre (9) est sensiblement indépendant d'une largeur de mailles de son tissu.

6. Filtre selon l'une quelconque des revendications 1 à 5, **caractérisé en ce que** le matériau du deuxième étage de filtre (9) se compose au moins en partie de cellulose, de fibres synthétiques, de fibres de verre ou similaires, ou d'une combinaison de ces matériaux.

7. Filtre selon l'une quelconque des revendications 1 à 6, **caractérisé en ce que** le deuxième étage de filtre (9) présente au moins une couche de matériau à microfibres, qui se compose de préférence au moins en partie de polyester.

8. Filtre selon l'une quelconque des revendications 1 à 7, **caractérisé en ce que** le premier étage de filtre (7) se compose au moins en partie de cellulose ou de fibres de verre ou d'une combinaison de ces matériaux.

9. Filtre (1) selon l'une quelconque des revendications 1 à 8, **caractérisé en ce que** le deuxième étage de filtre (9) comprend un insert de filtre en étoile.
